**Europäisches Patentamt**

**European Patent Office**

**Office européen des brevets**

(19)

(11) Veröffentlichungsnummer: **0 349 881 B1**

(12) **EUROPÄISCHE PATENTSCHRIFT**

(45) Veröffentlichungstag der Patentschrift:
**13.11.91 Patentblatt 91/46**

(51) Int. Cl.$^5$: **F16L 5/02**

(21) Anmeldenummer: **89111632.9**

(22) Anmeldetag: **26.06.89**

(54) Brandschutztechnische Manschette.

(30) Priorität: **29.06.88 DE 3821969**

(43) Veröffentlichungstag der Anmeldung:
**10.01.90 Patentblatt 90/02**

(45) Bekanntmachung des Hinweises auf die
Patenterteilung:
**13.11.91 Patentblatt 91/46**

(84) Benannte Vertragsstaaten:
**AT BE CH DE ES FR GB IT LI LU NL SE**

(56) Entgegenhaltungen:
**EP-A- 0 116 233**
**EP-A- 0 257 146**
**EP-A- 0 271 248**

(73) Patentinhaber: **Späth, Michael Max, Dr.**
**Lindwurmstrasse 10/VII**
**W-8000 München 2 (DE)**

(72) Erfinder: **Späth, Michael Max, Dr.**
**Lindwurmstrasse 10/VII**
**W-8000 München 2 (DE)**

(74) Vertreter: **Vogeser, Werner, Dipl.-Ing. et al**
**Patentanwälte + Rechtsanwälte Hansmann,**
**Vogeser, Boecker & Alber**
**Albert-Rosshaupter-Strasse 65**
**W-8000 München 70 (DE)**

**Beschreibung**

Beim vorbeugenden Brandschutz an Gebäuden stellt sich, besonders bei größeren Industriebauten, Verwaltungsgebäuden, Schulen oder Krankenhäusern, das Problem, daß als feuerbeständig, z.B. nach F 90 A eingestufte Geschoßdecken, oder auch Wände von Leitungen durchstoßen werden, die oft als Brandleiter wirken.

Bei diesen Leitungen kann es sich um alle Arten von Versorgungsund Entsorgungsleitungen wie Frischwasser und Abwasserleitungen, Rohre für Preßluft, technische Gase, Abluft oder auch elektrische Leitungen handeln. Alle diese Leitungen durchlaufen die feuerbeständigen Geschoßdecken oder Wände durch hierfür vorgesehene Aussparungen. Diese Aussparungen müssen jedoch zur Montage der Leitungen grundsätzlich wesentlich größer bemessen sein, als es der Durchmesser der Leitung bzw. des Leitungsbündels erfordert. Dadurch bleiben nach Montage der Leitung zwischen der Leitung und Wand bzw. Geschoßdecke Hohlräume zurück, durch die hindurch sich ein Brand ausbreiten kann, wodurch die Funktion der Wand oder Geschoßdecke als Feuersperre unterlaufen wird.

Um dies zu verhindern, werden die in den Aussparungen zurückbleibenden Hohlräume zwischen Leitungen und Wand bzw. Geschoßdecke beispielsweise mit sehr stark wärmedämmendem Material wie etwa Mineralwolle oder ähnlichem angefüllt. Dadurch wird die Ausbreitung eines Brandes durch derartige verbleibende Durchbrüche durch ansonsten feuerbeständige Geschoßdecken oder Wände hindurch etwas gehemmt.

Eine diesbezügliche vorteilhafte Einbauvorrichtung zeigt die EP-A-0257146. Dort wird ein aus zwei ineinander laufenden Hülsen bestehender zylindrischer Schalkörper zum Freihalten eines Hohlraumes in beispielsweise einer Decke verwendet. Die Stirnseiten des Schalkörper weisen in der Mitte einen relativ großen Durchlaß auf, durch welche sich später die hindurchzuführende Leitung erstreckt. Zwischen die Leitung und dem Schalkörper wird eine Füllung aus isolierendem Material eingebracht. Eng anliegend um den Außendurchmesser der Leitung wird auf beide Stirnseiten des Schalkörper ein Ring aufgelegt, dessen Außendurchmesser größer ist als der Innendurchmesser in den stirnseitigen Öffnungen des Schalkörper. Zusammen mit einem übergeschobenen Deckel, dessn zentrische Aussparung für die Leitung wiederum größer ist als deren Außendurchmesser und in etwa der Größe der Öffnung in der Stirnseite des Schalkörper entspricht, wird der abdichtende Ring in Position gehalten, wodurch zwei parallel bzw. fluchtend mit den beiden Flächen der Geschoßdecke verlaufende Abdeckungen gebildet werden.

Damit zeigt diese Entgegenhaltung gerade eine Füllung, die eine besonders geringe Wärmeleitfähigkeit besitzt und keine Wärme von der Leitung an das Material der durchbrochenen Decke weitergeben kann. Dies wurde auch bereits dadurch verhindert, daß der zylindrische Schalkörper an dem meist unregelmäßigen Durchbruch nur punktuell und nicht flächig anliegt.

Durch solche Vorrichtungen wird jedoch eine solche Brandausbreitung nicht verhindert, die dadurch zustande kommt, daß die Leitung von der Brandseite her so stark erhitzt wird, daß aufgrund der Wärmeleitung der Leitungen Gegenstände, die auf der anderen, also vom Brand abgeschotteten, Seite der Wand oder Geschoßdecke an dieser Leitung anliegen, durch Überschreiten der Schwel- oder Zündtemperatur schwelen oder entzündet werden. Dies ist besonders häufig bei Bodenbelägen wie Teppichböden und ähnlichem der Fall, die direkt oder indirekt diese Leitung auf der brandabgewandten Seite berühren. Dieser Vorgang funktioniert naturgemäß besonders dann, wenn die Wandung der Leitung aus gut wärmeleitendem Material besteht, was grundsätzlich bei allen aus Metall bestehenden Leitungen wie Gasrohren etc. der Fall ist. Ein derartiger Wärmetransport mittels der Wandung der Leitung durch die abschottende Wand oder Geschoßdecke hindurch, kann nur dadurch vermieden werden, daß im Bereich der Wand oder Geschoßdecke eine starke Wärmeleitung von der Wandung der Leitung zum Material der Wand oder Geschoßdecke hin geschieht, so daß auf der brandabgewandten Seite der Wand die Leitung nicht mehr die Schwel- oder Zündtemperatur der. anliegenden Materialien erreicht. Dies wurde bisher dadurch verursacht, daß die nach Montage zwischen Leitung und Geschoßdecke bzw. Wand zurückbleibenden Hohlräume durch feuerbeständigen, betonartigen Mörtel ausgefüllt wurden. Dies bringt jedoch nicht nur bauakustische Nachteile mit sich, sondern fördert beispielsweise bei metallischen Leitungen in hohem Maße eine Spaltkorrosion an den Berührungsfächen der Wand der Leitung mit dem eingebrachten Mörtel. Zusätzlich kann im Brandfall durch unterschiedliches Ausdehnungsverhalten des Materials der Leitung und des Brandschutzmörtels eine Deformierung der Wandung der Leitung auftreten, die oftmals eine Undichtigkeit der Leitung nach sich zieht, was besonders bei Leitungen für brennbare Inhaltsstoffe für den Brandfortschritt fatale Folgen haben kann.

Es ist daher die Aufgabe der Erfindung, für die nach dem Hindurchziehen von Leitungen durch Geschoßdecken oder Wände verbleibenden Hohlräume eine feuer- und rauchundurchlässige, feuerbeständige und hitzeableitende Abdichtung zu schaffen, die weder im Brandfall noch im Normalzustand eine unbeabsichtigte Beschädigung der Leitungen erwarten läßt.

Diese Aufgabe wird durch die Merkmale des Anspruchs 1 gelöst. Die für das Hindurchziehen von Leitungen in Geschoßdecken oder Wänden belassenen Aussparungen werden nach Montage der Leitungen mit einem sehr gut wärmeleitendem Streckmaterial wie etwa Streckmetall so angefüllt, daß diese Füllung einerseits die Wandung der Leitung und andererseits das umgebende Material der Wand bzw. Geschoßdecke möglichst gut berührt, um so eine Wärmeleitung von der Oberfläche der erhitzten Leitung zur Wand bzw. Geschoßdecke hin zu ermöglichen. Vorzugsweise wird eine solche Füllung der verbleibenden Zwischenräume über die gesamte Dicke der Decke bzw. Wand vorgenommen werden, so daß die Wärmeleitfähigkeit des Streckmaterials dann ausreichend ist, wenn es in der Größenordnung der Wärmeleitfähigkeit von üblichem Baumaterial für Geschoßdecken und Wände, also beispielsweise Beton liegt.

Dabei kann das Streckmaterial, im folgenden speziell als Streckmetall angesprochen, in Form einer Vielzwahl im wesentlichen parallel zueinanderliegender Schichten von Streckmetall verwendet werden, oder auch in Form von etwa kugelförmigen Füllkörpern, die ebenfalls aus Streckmetall geformt werden.

Der Vorteil derartiger, kugelförmiger Füllkörper besteht in der einfacheren Verwendungsweise, da diese Füllkörper — z.B. beim Anfüllen der Hohlräume bei einer durch eine Geschoßdecke hindurchführenden Leitung — nach Anbringung einer unteren Abdeckung, die fluchtend mit der unteren Geschoßdecke bis dicht an die Leitung heranreicht, in den darüberliegenden Hohlraum einfach hineingeschüttet werden können und anschließend, um eine möglichst gute Berührung der Füllkörper mit der Leitung und dem umgebenden Material der Geschoßdecke zu gewährleisten, auch etwas eingepreßt werden können, was aufgrund der den Füllkörpern eigenen Elastizität keine Zerstörung der Struktur des Streckmetalles nach sich zieht. Durch eine solche leichte Pressung der Füllung in den vorhandenen Hohlräumen kann die Berührung der Füllkörper mit der Leitung einerseits und der umgebenden Geschoßdecke bzw. Wandung andererseits vergrößert werden, was sich auf die Kapazität der Wärmeableitung positiv auswirkt.

Selbstverständlich müssen die beiden Abdeckungen auf beiden Seiten der Manschette, die parallel und meist auch fluchtend mit den beiden Flächen der Wand bzw. Geschoßdecke, die durchbrochen wird, verlaufen, nicht nur ausreichende statische Stabilität aufweisen, da ja beispielsweise die obere Abdeckung bei einer Geschoßdecke u.U. durch abgestellte Gegenstände belastet werden kann, sondern diese Abdeckungen müssen auch eine ausreichende Hitzebeständigkeit aufweisen, da bei Zerstörung dieser Abdeckung im Brandfall die gesamte Wirkung der Manschette verlorengehen kann.

Gleichzeitig sollten diese Abdeckungen gegenüber der Füllung wärmeisoliert werden, damit die Ableitung der Wärme von der Leitung über die Füllung vorzugsweise zum Material der Geschoßdecke bzw. Wand geschieht und nur in möglichst geringem Maß über die Abdeckungen selbst. Im Idealfall müsste daher jede der Abdeckungen auch gegenüber der Leitung selbst isoliert werden, so daß die Abdeckung selbst nicht unmittelbar bis an die Leitung heranreichen sollte, sondern eine dazwischen angeordnete Isolierschicht, ebenfalls wieder beispielsweise aus Mineralfasern, empfehlenswert ist.

Des weiteren muß grundsätzlich zwischen zwei verschiedenen Anwendungsfällen unterschieden werden, welche sich nach Art und Material der zu umgebenden Leitung bzw. Leitungen richten : In der bisher beschriebenen Art und Weise ist vorzugehen, wenn der Durchgang von Leitungen geschützt werden soll, bei denen zumindest die Wandung der Leitung aus weitgehend feuerbeständigem Material besteht, wovon beispielsweise bei den meisten Leitungen mit metallischen Wandungen auszugehen ist. Diese Leitungen dehnen sich zwar unter Hitzeeinwirkung etwas aus, behalten jedoch im wesentlichen ihre Gestalt bei, so daß es nicht aufgrund einer Kulturveränderung der Leitung selbst zum Entstehen von Hohlräumen zwischen Leitung und umgebender Geschoßdecke oder Wand im Brandfall kommen kann.

Die Leitung kann auch aus nicht hitzebeständigem Material bestehen, wie dies beispielsweise bei Abwasserrohren aus PVC-Material und ähnlichem der Fall ist. Derartige Materialien werden zwar im Brandfall nicht unbedingt selbst zu brennen beginnen, jedoch wird ein solches Rohr bei ausreichender Hitzeeinwirkung in die Schmelze übergehen und damit in sich zusammenfallen, wodurch im Brandfall in der Geschoßdecke bzw. Wand ein entsprechender Durchlaß entsteht, der die abschottende Wirkung dieser Wand oder Geschoßdecke zunichte machen kann. Sofern es sich dabei um eine vertikale Leitung durch eine Geschoßdecke handelt, welche nicht von Schichten von Streckmaterial, sondern von kugelförmigen Füllkörpern umgeben ist, könnte sich zwar durch von oben bis zur Mitte des schmelzenden PVC-Rohres nachrutschende Füllkörper ein Verschluß dieses Durchlasses ergeben, jedoch kann dies nicht als ausreichend sichere Methode zur Unterbindung des Brandfortschritts gesehen werden. Vielmehr empfiehlt es sich bei nicht ausreichend hitzebeständigen und noch dazu hohlen Leitungen eher, diese Leitungen im Bereich des Durchbruchs der Geschoßdecke bzw. Wand mit einer feuerbeständigen Ummantelung zu umgeben, wobei sich zwischen der Ummantelung und der Leitung selbst eine Zwischenschicht aus einem Material befinden muß, welches unter Hitzeeinwirkung stark anschwillt. Derartige, an sich bekannte Ummantelungen entwickeln durch das Aufschwellen des Materials dieser Zwischenschicht im Brandfall eine sehr große, zur Mitte der Ummantelung gerichtete Kraft, da diese Ummantelung stabil genug ist, um diesen Druck nicht in eine mechanische Verformung nach außen zu richten. Hierdurch wird im Brandfall die ummantelte Leitung regelrecht abgequetscht, so daß ein ansonsten entstehender Durchlaß durch die Geschoßdecke bzw. Wand innerhalb kurzer Zeit abgedichtet wird. Da das besagte Material zwar erst bei Hitzeeinwirkung reagiert, aber nicht unbedingt über eine lange Zeit noch höheren Temperaturen standhalten kann, empfiehlt es sich, eine solche Ummantelung der zu schützenden Leitung nicht über die gesamte Breite der durchlaufenen Wand bzw. Geschoßdecke anzuordnen, also nicht von einer Abdeckung bis zur gegenüberliegenden Abdeckung, sondern nur im mittleren Bereich, um zwischen der Ummantelung und den beiden Abdeckungen jeweils noch eine Füllung aus Streckmetall, sei es in Form von Schichten oder in Form von runden Füllkörpern, anordnen zu können, welche auch nach dem Aufschwellen des Materials der Zwischenschicht dieses vor der unmittelbaren Brandhitze schützt.

Zwei Ausführungsformen gemäß der Erfindung sind im folgenden anhand der Figuren beispielhaft näher beschrieben. Es zeigen :

Fig. 1    eine hitzebeständige Leitung, welche durch eine Geschoßdecke hindurch verläuft und

Fig. 2    eine Leitung aus nicht hitzebeständigem Material, welche durch eine Wand hindurch verläuft.

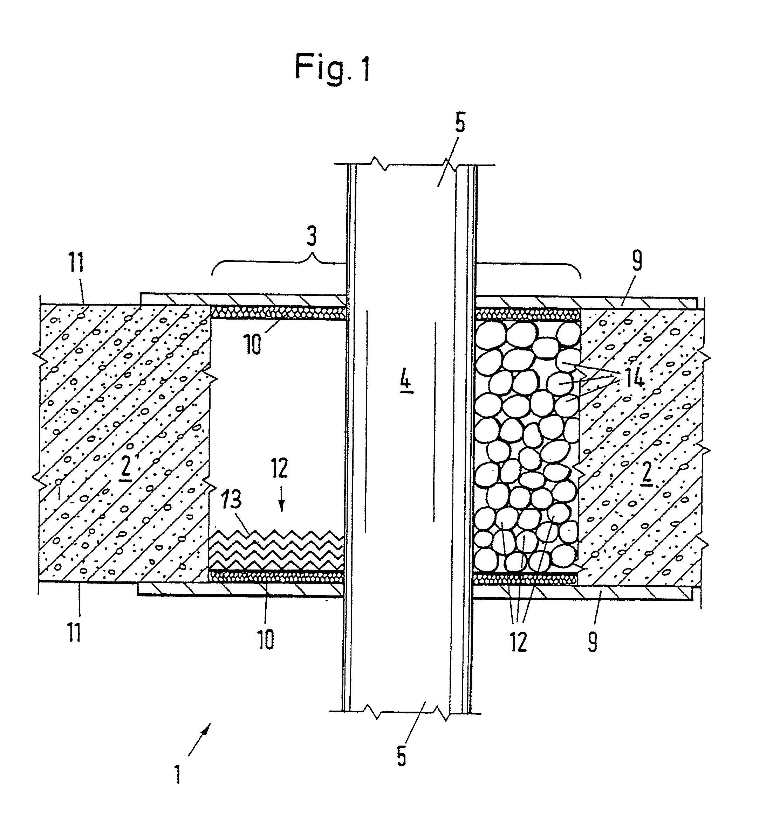

Fig. 1 zeigt die Schnittdarstellung einer Geschoßdecke 2 mit der oberen und unteren Fläche 11, in der eine Aussparung 3 belassen wurde, durch die hindurch sich die etwa vertikal verlaufende Leitung 4 erstreckt. Diese Leitung 4 besteht im wesentlichen aus einer Wandung 5 aus hitzebeständigem Material, welche im Brandfall zumindest für eine ausreichend lange Zeit ihre Form beibehalten würde. Bei einer so beschaffenen Leitung 4 muß also hauptsächlich verhindert werden, daß die zwar hitzebeständige, aber meist auch gut wärmeleitende Wandung 5 die Brandhitze von der einen Seite der Geschoßdecke 2 zur anderen weiterleitet und dort Bodenbeläge, abgehängte Decken od.ähnlich schwelen bzw. entzünden kann. Zu diesem Zweck wird — bei einer waagerecht verlaufenden Geschoßdecke wie in Fig. 1 dargestellt — zunächst eine untere Abdeckung 9 mittels nicht dargestellter Befestigungselemente so an der unteren Fläche 11 der Geschoßdecke 2 montiert, daß diese mit der unteren Fläche 11 der Geschoßdecke 2 fluchtet. Diese Abdeckung 9 kann einstückig ausgebildet sein und zur Montage z.B. entlang eines radialen Einschnittes, zum über die Leitung 4 Schieben aufgebogen werden, oder es können auch mehrteilige Abdeckungen 9 Verwendung finden. Diese Abdeckung 9 sollte vorzugsweise die Leitung 4 nicht direkt berühren, da sie ansonsten im Brandfalle über die Wandung 5 der Leitung 4 selbst stark aufgeheizt würde, was brandschutztechnisch wegen eventuell angrenzender Gegenstände nicht immer wünschenswert ist, obwohl auch über diese Art der Abdeckung 9 bei direkter Berührung mit der Wandung 5 eine Ableitung der Wärme an das Material der Geschoßdecke 2 stattfinden kann. Unabhängig davon kann, wie im in Fig. 1 dargestellten Fall, eine Isolierschicht 10 auf der Abdeckung 9 aufgebracht werden, die sich auch zwischen die Stirnfläche der Abdeckung 9 und die Leitung 4 hineinerstreckt und an der Leitung 4 anliegt. Selbstverständlich kann eine solche Isolierschicht 10 bereits fest auf der Abdeckung 9 vor der Montage aufgebracht sein. Die Abdeckung 9 selbst kann z.B. entweder mit Hilfe einfacher Schrauben und eventuell Dübel gegen die Geschoßdecke 2 verschraubt sein, oder auch innerhalb der Aussparung 3 mit Hilfe entsprechend gestalteter Montagewinkel oder ähnlichen Vorrichtungen. Darüber hinaus kann jede andere geeignete Befestigungsart gewählt werden.

In den über der unteren Abdeckung 9 nunmehr vorhandenen Hohlraum im Bereich der vertikalen Ausdehnung der Geschoßdecke 2 wird die Füllung 12 aus möglichst hitzebeständigem und wärmeleitendem Streckmaterial, vorzugsweise Streckmetall, eingebracht. Das Streckmetall kann dabei entweder in Form von z.B. im wesentlichen parallel zueinander liegenden und sich gegenseitig berührenden Schichten 13 eingebracht werden, von denen einige im linken Teil der Fig. 1 angedeutet sind, oder das Streckmetall kann in Form etwa kugelförmiger Füllkörper 14 eingebracht werden. Diese Füllkörper 14 haben den Vorteil, daß sie lose in bestehende Hohlräume hineingeschüttet oder eingeblasen und anschließend leicht nachgepreßt werden können, wodurch auch von oben beim Befüllen nicht unbedingt sichtbare oder zugängliche Hohlräume, also etwa konkave Taschen in der Stirnseite der Geschoßdecke 2 und ähnliches, ausgefüllt werden können, so daß eine gute und großflächige Berührung der Füllkörper 14 untereinander sowie mit der Wandung 5 der Leitung 4 und den Stirnflächen der Geschoßdecke 2 gegeben ist. Nach dem Einbringen dieser Füllung 12 wird die Aussparung 3 nach oben hin wiederum mit einer Abdeckung 9 verschlossen, die in Aufbau und Gestalt, auch im Hinblick auf die Isolierschicht 10, im wesentlichen wieder der unteren Abdeckung 9 entspricht.

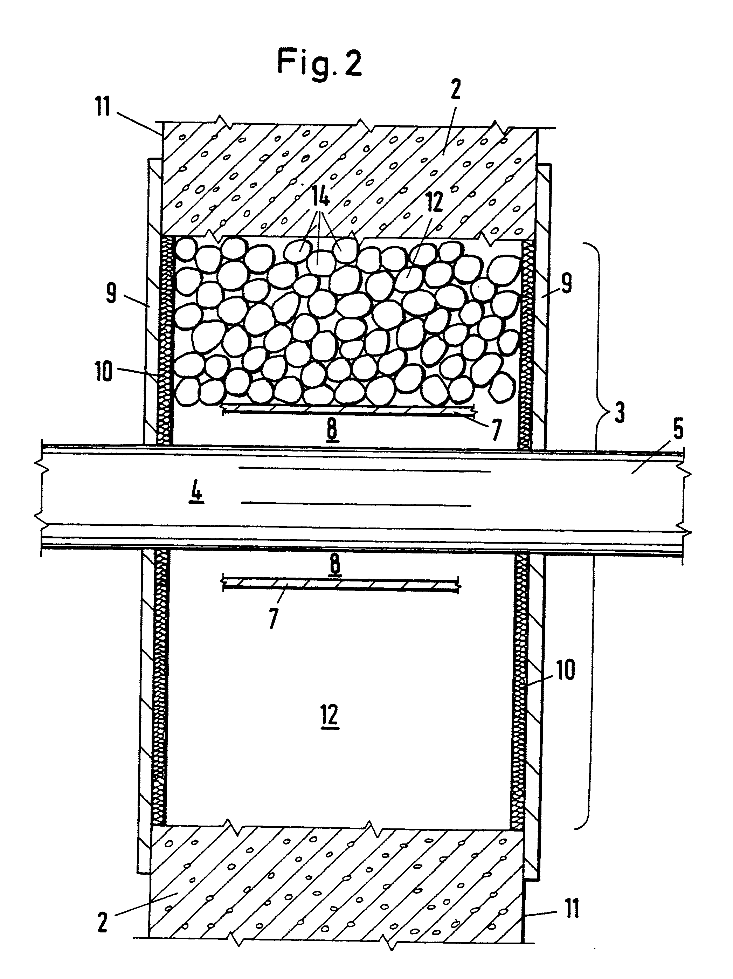

Handelt es sich dagegen bei der Leitung 4 um ein nicht hitzebeständiges Material, welches im Brandfall seine Gestalt verändern bzw. sogar beispielsweise durch Schmelze vollständig in sich zusammenfallen würde, so ist eine brandschutztechnische Manschette entsprechend der Fig. 2 aufzubauen, welche hier für den Durchlauf der Leitung 4 durch eine senkrechte Wand 2 dargestellt ist.

Dieser Aufbau unterscheidet sich von dem Aufbau der Fig. 1 lediglich dadurch, daß die Füllung 12, also die Füllkörper 14 bzw. die in Fig. 2 nicht mehr dargestellten Schichten 13 aus Streckmetall zumindest im Bereich in der Mitte zwischen den beiden Abdeckungen 9 nicht mehr direkt an der inneren Wandung 6 der Leitung 4 anliegen, da diese innere Wandung 6 in diesem Bereich nochmals konzentrisch von einer Ummantelung 7 umgeben ist, wobei sich zwischen dieser Ummantelung 7 und der inneren Wandung 6 eine Zwischenschicht 8 aus einem bekannten Material befindet, welches im Brandfalle, also unter Hitzeeinwirkung, sehr stark aufschwillt. Diese im wesentlichen bekannte Ummantelung 7 samt Zwischenschicht 8 bewirkt, daß wegen der Stabilität der Ummantelung 7, die beim Aufschwellen der Zwischenschicht 8 entstehenden Kräfte ausschließlich zur Mitte der Ummantelung und damit der Leitung 4 hingerichtet werden, so daß unter Hitzeeinwirkung durch die aufschwellende Zwischenschicht 8 die Leitung 4 vollständig und dicht abgequetscht wird. Dadurch entsteht an Stelle der Leitung 4 im Brandfall kein offener Durchlaß, durch den hindurch der Brand sich ausbreiten könnte.

Um diese Ummantelung 7 der inneren Wandung 6 der Leitung 4 im Brandfall nach der Reaktion der Zwischenschicht 8 nicht der direkten Hitzeeinwirkung auszusetzen, befindet sich diese Ummantelung 7 mit der Zwischenschicht 8 nur im mittleren Bereich zwischen den beiden Abdeckungen 9, so daß sich im Zwischenraum, in axialer Richtung der Leitung 4 gesehen, zwischen den Abdeckungen 9 und der Ummantelung 7 mit der Zwischenschicht 8 jeweils noch die Füllung 12 befindet, welche nicht nur die Wärme von der inneren Wandung 6 der Leitung 4 zum Material der Wand 2 ableitet, sondern auch von der Ummantelung 7 Wärme zur Wand 2 weiterleitet.

Auf diese Art und Weise wird, je nach Erfordernissen und Beschaffenheit der Leitung 4, im Brandfall im Bereich der Wand bzw. Geschoßdecke 2 soviel Wärme von der Leitung 4 zum Material der Wand bzw. Geschoßdecke 2 abgeleitet, daß auf der vom Brand abgewandten Seite die Leitung 4 zumindest über eine längere Zeit keine so hohe Temperatur erreicht, daß hierdurch die Schwel- bzw. Zündfähigkeit für umgebende Materialien gegeben ist.

Obwohl im Falle der Fig. 1 und 2 die beiden Abdeckungen 9 jeweils nicht nur parallel, sondern fluchtend und anliegend an die beiden Flächen 11 der Wand bzw. Geschoßdecke 2 dargestellt ist, können diese beiden Abdeckungen 9 auch im Abstand von der Wand bzw. Geschoßdecke 2 parallel zu deren Flächen 11 verlaufen, so daß der gegenseitige Abstand der Abdeckungen 9 größer ist als die Dicke der Wand 2, sofern durch eine entsprechende Kröpfung oder ähnliches der Abdeckungen 9 eine so dichte Anlage an der Wand bzw. an der Geschoßdecke 2 gegeben ist, daß die Füllung 12 in Form von Schichten 13 und Füllkörpern 14 nicht durch hier vorhandene Zwischenräume verlorengehen kann.

Ebenso können die Abdeckungen 9 einen gegenseitigen Abstand aufweisen, der geringer ist als die Dicke der Wand bzw. Geschoßdecke 2, gemessen in axialer Richtung der Leitung 4. Im allgemeinen wird man jedoch bestrebt sein, die Füllung 12 in einem möglichst großen Bereich zur Anlage an die Wand bzw. Geschoßdecke 2 zu bringen, so daß für die beiden Abdeckungen 9 ein Abstand mindestens entsprechend der Dicke der Wand bzw. Geschoßdecke 2 gewählt werden wird. Ein noch größerer Abstand der beiden Abdeckungen 9 wird nur dann zu empfehlen sein, wenn die Füllung 12 z.B. eine etwas geringere Wärmeleitfähigkeit als das Material der umgebenden Wand bzw. Geschoßdecke 2 aufweist, da dann zur Weiterleitung der Wärme von der Leitung an an die umgebende Wand bzw. Geschoßdecke 2 das Material der Füllung 12 in größerer Breite — gemessen entlang der axialen Länge der Leitung 4 — an der Oberfläche der Leitung 4 anliegen sollte, als es der Breite der Geschoßdecke bzw. Wand 2 entspricht.

## Patentansprüche

1. Brandschutztechnische Vorrichtung mit einer Manschette und Leitungen, die feuerbeständige Wände bzw. Geschoßdecken durch entsprechende Aussparungen durchstoßen, sowie zwei parallel oder fluchtend mit den beiden Flächen (11) der Wand bzw. Geschoßdecke (2) verlaufende Abdeckungen (9) und einer Füllung (12) in dem Raum zwischen den beiden Abdeckungen (9) der Leitung (4) und der umgebenden Wand bzw. Geschoßdecke (2), **dadurch gekennzeichnet, daß**

— die Abdeckungen (9) stabil, rauchdicht und feuerbeständig, z.B. aus Keramikmaterial oder hoch schmelzenden Metall-Legierungen bestehend, ausgebildet sind und

— die Füllung (12) aus Streckmaterial mit einer Wärmeleitfähigkeit in der Größenordnung von Beton, z.B. Streckmetall, und den Raum zwischen den beiden Abdeckungen (9), der Leitung (4) bzw. den Leitungen (4) und der umgebenden Wand bzw. Geschoßdecke (2) im wesentlichen so ausfüllt, daß zumindest die umgebende Wand bzw. Geschoßdecke (2) sowie die Leitungen (4) in innigem Kontakt mit der Füllung (12) stehen.

2. Brandschutztechnische Vorrichtung nach Anspruch 1, **dadurch gekennzeichnet, daß** die Füllung (12) aus einzelnen, im wesentlichen parallel liegenden und sich gegenseitig berührenden Schichten (13) aus Streckmetall besteht.

3. Brandschutztechnische Vorrichtung nach Anspruch 1, **dadurch gekennzeichnet, daß** die Füllung (12) aus im wesentlichen runden Füllkörpern (14) aus Streckmetall besteht.

4. Brandschutztechnische Vorrichtung nach einem der Ansprüche 1 bis 3, **dadurch gekennzeichnet, daß** daß die Leitung (4) feuerbeständige Wandungen (5) aufweist.

5. Brandschutztechnische Vorrichtung nach einem der Ansprüche 1 bis 3, **dadurch gekennzeichnet, daß** die Leitung (4) eine nicht feuerbeständige innere Wandung (6) sowie eine stabile Ummantelung (7) aufweist, wobei sich zwischen der Ummantelung (7) und der inneren Wandung (6) eine Zwischenschicht (8) aus einem bei Hitze stark aufschwellenden Material befindet.

6. Brandschutztechnische Vorrichtung nach einem der vorhergehenden Ansprüche, **dadurch gekennzeichnet, daß** sich eine Isolierschicht (10) sowohl zwischen der Füllung (12) und den Abdeckungen (9) als auch zwischen den Abdeckungen (9) und der Leitung (4) befindet, die beispielsweise aus Mineralfasern besteht.


## Claims

1. Fire control device having a collar and conduits penetrating fireproof walls or ceilings through respective openings and two coverings (9) oriented parallel to or aligned with the two surfaces (11) of the wall or ceiling (2) and a filling (12) in the space between the two coverings (9) the conduit (4) and the surrounding wall or ceiling (2), characterized in that
— two stable, smoketight fireproof coverings (9) comprise e.g. of a ceramic material or of metal alloys having a high melting piont and
— the filling (12) of expanded material with a thermal conductivity of the same order of magnitude as concrete, e.g., expanded metal essentially fills up the space between the two coverings (9), the conduit (4) or the conduits (4) and the surrounding wall or ceiling (2) in such a way that at least the surrounding wall or ceiling (2) and the conduits (4) are in intimate contact with the filling (12).

2. Device according to Claim 1 characterized in that the filling (12) comprises individual sheets (13) of expanded metal that are essentially parallel to and in contact with each other.

3. Device according to claim 1 characterized in that the filling (12) comprises filling particles (14) of expanded metal that are essentially round.

4. Device according to one of the claims 1 through 3 characterized in that the conduit (4) has fireproof walls (5).

5. Device according to one of the claims 1 through 3, characterized in that the conduit (4) has a non-fireproof interior wall (6) and a stable jacketing (7), with an intermediate layer (8) of material that expands strongly in the presence of heat located between the jacketing (7) and the interior wall (6).

6. Device according to one of the foregoing claims, characterized in that an insulating layer (10), composed, for example, of mineral wool, is located both between the filling (12) and the coverings (9) and between the coverings (9) and the conduit (4).


## Revendications

1. Dispositif technique de protection contre les incendies, avec un manchon et des conduites qui traversent des parois ou des plafonds résistant au feu, par des évidements qui leur correspondent, ainsi que deux revêtements (9) s'étendant parallèlement aux deux surfaces (11) de la paroi ou du plafond (2), ou dans leur alignement, et un remplissage (12) dans l'espace compris entre les deux revêtements (9), la conduite (4) et la paroi ou le plafond (2) qui l'entourent, caractérisé en ce que
— les revêtements (9) sont agencés de manière solide, étanche à la fumée et résistante au feu, en étant, par exemple, constitués en un matériau céramique ou en alliages métalliques à point de fusion élevé, et
— le remplissage (12) est en un matériau de séparation ayant une conductibilité thermique du même ordre que celle du béton, par exemple en métal déployé, et remplit essentiellement l'espace compris entre les deux revêtements (9), la ou les conduite(s) (4) et la paroi ou le plafond (2) environnant, de façon que au moins la paroi ou le plafond (2) environnant ainsi que les conduites (4) soient en contact étroit avec le remplissage (12).

2. Dispositif technique de protection contre les incendies, selon la revendication 1, caractérisé en ce que le remplissage (12) est constitué de couches (13) individuelles, en métal déployé, disposées de manière essentiellement parallèle et en contact mutuel.

3. Dispositif technique de protection contre les incendies, selon la revendication 1, caractérisé en ce que le remplissage (12) est constitué de corps de remplissage (14), essentiellement ronds, en métal déployé.

4. Dispositif technique de protection contre les incendies, selon l'une des revendications 1 à 3, caractérisé en ce que la conduite (4) présente des parois (5) résistantes au feu.

5. Dispositif technique de protection contre les incendies, selon l'une des revendications 1 à 3, caractérisé en ce que la conduite (4) présente une paroi intérieure (6), non résistante au feu, ainsi q'une gaine (7) solide, une couche intermédiaire (8) en un matériau gonflant fortement à la chaleur étant située entre la gaine (7) et la paroi intérieure (6).

6. Dispositif technique de protection contre les incendies, selon l'une des revendications précédentes, caractérisé en ce qu'une couche d'isolation (10), constituée par exemple en fibres minérales, est située aussi bien entre le remplissage (12) et le revêtement (9) qu'entre le revêtement (9) et la conduite (4).

# Fig. 1

# Fig. 2